# EUROPÄISCHE PATENTSCHRIFT

(11) **EP 0 836 959 B1**
(45) Veröffentlichungstag und Bekanntmachung des Hinweises auf die Patenterteilung: **20.02.2002**
(21) Anmeldenummer: 97115516.3
(22) Anmeldetag: 08.09.1997
(51) Int. Cl.: B60J 7/057, E05F 15/10

(54) **Notbetätigungseinrichtung für ein elektrisch betriebenes Schiebedach**
Emergency device for operating an electrically driven sliding roof
Dispositif d'émergence pour l'actionnement d'un toit coulissant

(30) Priorität: 19.10.1996 DE 19643210
(43) Veröffentlichungstag der Anmeldung: 22.04.1998
(73) Patentinhaber: Volkswagen Aktiengesellschaft, 38436 Wolfsburg (DE)
(72) Erfinder: Morsch, Klaus-Dieter, 38124 Braunschweig (DE); Maciejewski, Bernard, 38518 Gifhorn (DE); Godlinski, Jürgen Willi, 38448 Wolfsburg (DE); Schittek, Bernhard, 38162 Cremlingen (DE)

(56) Entgegenhaltungen:
- DE-U- 9 017 796
- US-A- 3 791 071
- US-A- 4 085 629

## Beschreibung

Die Erfindung betrifft eine im Oberbegriff des Patentanspruchs näher beschriebene Notbetätigungseinrichtung für ein elektrisch betriebenes Schiebe- oder Schiebe-Ausstell-Dach an einem Fahrzeug. Wenn im folgenden der Einfachheit halber von einem Schiebedach gesprochen wird, so ist damit zugleich auch immer ein Schiebe-Ausstell-Dach, auch ein reines Ausstelldach gemeint. Weiter soll der Begriff Schiebedach sich nicht nur auf starre Deckel beziehen, sondern es sollen auch Faltschiebedächer darunterfallen.

Bei elektrisch verstellbaren Schiebedächern muß für den Fall vorgesorgt sein, daß die Stromzufuhr mal ausfallen oder der Elektromotor aus anderen Gründen nicht intakt sein sollte, weil ein offenes Dach aus unterschiedlichen Gründen auch dann verschließbar sein muß. Es sind daher sogenannte Notbetätigungseinrichtungen entwickelt und gebaut worden.

Bei einer bekannten derartigen Einrichtung wird das in der Hülse geführte Kupplungselement mit einem das Werkzeug darstellenden Sechskantschlüssel, der stirnseitig in die mit einem Innensechskant versehene Hülse gesteckt wird, manuell gegen die Kraft der Feder so weit verschoben, bis der Mitnehmer außer Eingriff mit dem ersten Zahnrad ist. Das zweite Zahnrad ist jetzt von dem Getriebe abgekoppelt und kann mit Hilfe des Sechskantschlüssels verdreht werden, wobei die Drehbewegung in eine translatorische Bewegung oder Schwenkbewegung des Schiebedaches umgesetzt wird. Nachteilig ist bei dieser Lösung die Tatsache, daß die Aufhebung der Drehkopplung zwischen den beiden Zahnräder manuell durch Druckausübung auf das Werkzeug vorgenommen werden muß, während anschließend zum Verstellen des Schiebedachs eine Dreh- oder Schwenkbewegung des Werkzeugs erforderlich ist. Auch können unter bestimmten Bedingungen Verspannungen auftreten, die ein Verschieben des Kupplungselements mit dem Sechskantschlüssel erschweren.

Bei einer aus der US-A-3,791,071 bekannten Konstruktion ist das zweite Zahnrad außerhalb des Gehäuses auf einem das Gehäuse durchsetzenden Schaft angeordnet, der drehbar das erste Zahnrad trägt. Auf dem Schaft ist ferner dreh- und verschiebefest eine Scheibe angeordnet, die mit parallel zu dem Schaft weisenden Mitnehmerfortsätzen in Ausnehmungen des ersten Zahnrads eingreift. Zur Entkopplung der beiden Zahnräder wird mittels eines Werkzeugs eine Axialbewegung des Schafts mit der genannten Scheibe vorgenommen, an der das erste Zahnrad nicht teilnimmt, so daß die Mitnehmer außer Eingriff mit diesem gelangen und dieses nicht mehr antriebsmäßig mit dem zweiten Zahnrad gekoppelt ist. Diese Axialverschiebung des Schafts wird entgegen der Wirkung einer Feder mittels eines Werkzeugs vorgenommen, das auf das freie Ende des Schafts aufgeschraubt wird, sich dabei am Gehäuse abstützt und dadurch den Schaft entgegen der Wirkung der Feder axial verschiebt. Nach Beendigung dieser Entkopplungsbewegung wird über einen Ratschenmechanismus, der nach Art einer Einweg-Kupplung aufgebaut ist, eine drehfeste Verbindung zwischen Werkzeug und Schaft hergestellt, und zwar in einem der Drehrichtung während des Anschraubens des Werkzeugs entgegengesetzten Drehsinn, wobei die Abstützung des Werkzeugs am Gehäuse beibehalten wird. Demgemäß erfolgt die Verstellbewegung des Schiebedachs nicht nur entgegen den relativ hohen Reibkräften an der Abstützungsstelle, sondern auch mit einem Wechsel des Drehsinns des Werkzeugs, was für einen normalen Autofahrer nicht selbstverständlich ist. Außerdem ist ein relativ kompliziert aufgebautes Werkzeug, nämlich mit der beschriebenen Einweg-Kupplung, erforderlich.

Die Vorrichtung nach der gattungsbildenden US-A 4,085,629, die sich übrigens auf die Verstellung eines Fensters in einem Fahrzeug bezieht, erfordert ein noch komplizierter aufgebautes Werkzeug und eine noch umständlichere Betätigung. Mittels eines Drehknopfes wird hier ein stößelartiger Bestandteil des Werkzeugs in die Hülse eingeschraubt, der mit seinem freien Ende dann das Kupplungselement entgegen der Wirkung einer Gegenfeder so verschiebt, daß es nur noch mit dem ersten Zahnrad drehfest verbunden ist, aber keine drehfeste Verbindung über die Hülse mit dem zweiten Zahnrad herstellt, das bei dieser Konstruktion gemeinsam mit dem ersten Zahnrad innerhalb des Getriebegehäuses untergebracht ist. Bei diesem Einschraubvorgang wird ferner ein Hauptbestandteil des Werkzeugs in Drehverbindung mit dem ihm zugekehrten Endbereich der Hülse gebracht, und nach Beendigung der beschriebenen Entkopplungsprozedur für die beiden Zahnräder (streng genommen ist das zweite Zahnrad dort als Riemenscheibe ausgebildet) wird der Hauptbestandteil des Werkzeugs mittels eines kurbelartigen Schwenkgriffs zusammen mit der Hülse und dem mit dieser drehverbundenen zweiten Zahnrad verschwenkt, dessen Drehbewegungen gleichsam Antriebsbewegungen für die Scheibenverstellung bilden. Ohne Lesen einer Bedienungsanleitung ist es einem normalen Fahrzeuginsassen nicht möglich, dieses Werkzeug zu bedienen.

Der Erfindung liegt die Aufgabe zugrunde, eine Notbetätigungseinrichtung zu schaffen, die mittels eines einfach aufgebauten Werkzeugs auf einfache Weise zu bedienen ist.

Diese Aufgabe wird mit den kennzeichnenden Merkmalen des Patentanspruchs gelöst.

Ein Ausführungsbeispiel der Erfindung wird anhand der Zeichnung nachfolgend näher erläutert, in der der für das Verständnis der Erfindung wesentliche Teil einer Notbetätigungseinrichtung in zwei Stellungen gezeigt ist.
Figur 1 zeigt die Stellung "Notbetätigung aus";
Figur 2 zeigt die Stellung "Notbetätigung ein".

In einem durch einen Deckel 1 verschließbaren Getriebegehäuse 2 ist ein Zahnrad 3 gelagert, das mit einem weiteren, nicht dargestellten, von einem Elektromotor antreibbaren Zahnrad in Eingriff ist. Das Gehäuse 2 ist in zwei koaxialen Öffnungen 4, 5 durchsetzt von einer Hülse 6, an deren oberem Ende ein auf der Außenseite des Deckels 1 befindliches Zahnrad 7 angeordnet ist, welches mit nicht dargestellten Antriebselementen für das Schiebedach in Eingriff steht. Die Hülse 6 durchsetzt auch das Zahnrad 3. In der Bohrung 8 der Hülse 6 ist axial verschiebbar ein Kupplungselement 9 angeordnet, das über zwei sich diametral gegenüberliegende, die Wandung der Hülse 6 in Schlitzen 10, 11 (11 nicht sichtbar) durchsetzende flache Mitnehmer 12, 13 in der Hülse 6 geführt ist. Den Mitnehmern 12, 13 zugeordnet sind zwei Nuten 14, 15 (15 nicht sichtbar) im Boden des topfförmig ausgebildeten Zahnrades 3. (Die Nut 15 liegt in der Verlängerung der Nut 14.)

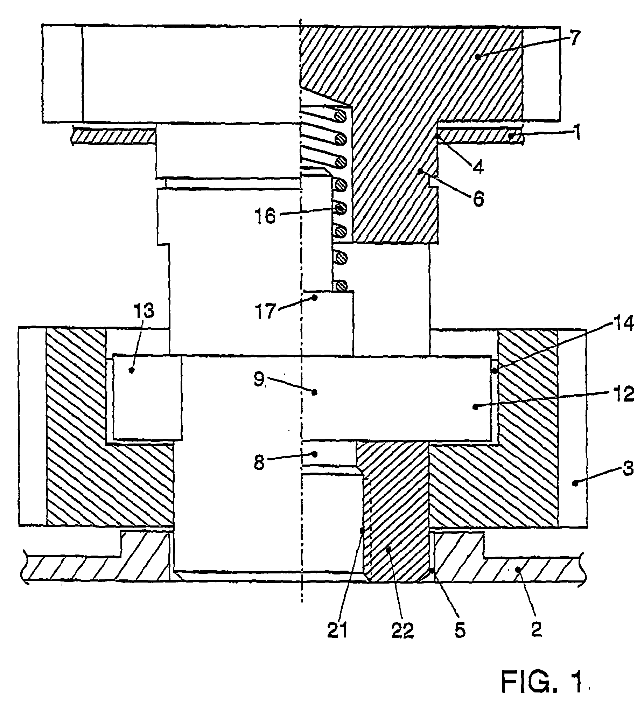

Im Normalfall, wenn also die Notbetätigung nicht gebraucht wird (Figur 1), liegen die Mitnehmer 12, 13 formschlüssig in den beiden Nuten 14, 15 und werden dort durch die Kraft der Feder 16 über einen Gegenhalter 17 gehalten. Damit wird eine Drehung des Zahnrades 3 zwangsläufig auf das Zahnrad 7 übertragen.

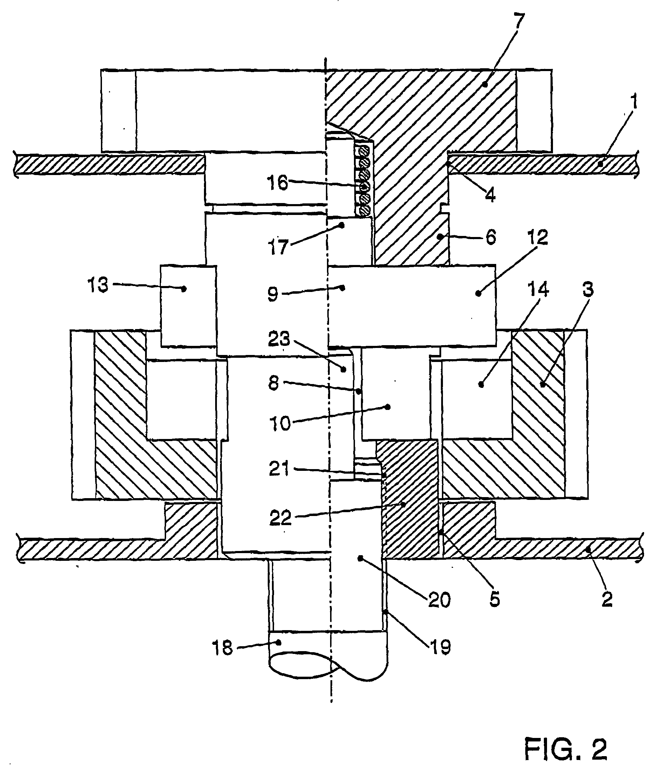

Im Falle beispielsweise eines Stromausfalls kann das Schiebedach über die Notbetätigungseinrichtung bewegt (geöffnet, geschlossen oder verschwenkt) werden, wie sie aus der Figur 2 erkennbar ist. Als Hilfswerkzeug dient ein mitgeführter Schlüssel 18, der einen mit Außengewinde 19 versehenen Abschnitt 20 aufweist, dem ein mit Innengewinde 21 versehener Abschnitt 22 im unteren Endbereich der Hülse 6 zugeordnet ist. Ein stimseitig am Abschnitt 20 angeformter Zapfen 23 drückt beim Einschrauben des Abschnitts 20 in die Hülse 6 gegen das Kupplungselement 9 und verschiebt dasselbe gegen die Kraft der Feder 16. Dabei werden die Mitnehmer 12, 13 aus den Nuten 14, 15 des Zahnrades 3 herausbewegt, d. h., es findet eine Entkopplung zwischen Zahnrad 3 und Zahnrad 7 statt. Das Zahnrad 7 kann jetzt mit Hilfe des Schlüssels 18 gedreht werden, ohne daß sich diese Drehbewegung auf das Zahnrad 3 und weitere Antriebselemente bis hin zum Elektromotor überträgt. Die axiale Verschiebung des Kupplungselements 9 erfolgt aufgrund der Umsetzung einer Drehbewegung in eine Längsbewegung mit nur geringem Kraftaufwand.

## Patentansprüche

1. Notbetätigungseinrichtung für ein elektrisch betriebenes Schiebe- oder Schiebe-Ausstell-Dach an einem Fahrzeug mit einem Elektromotor und einem von einem Gehäuse (2) umgebenen Getriebe, welches ein angetriebenes erstes Zahnrad (3) enthält, das über eine von außerhalb des Gehäuses (2) ausrückbare Kupplung (9, 12, 13, 14) mit einem mit Antriebselementen des Schiebedachs in Eingriff befindlichen zweiten Zahnrad (7) drehfest verbunden ist, wobei die Kupplung (9, 12, 13, 14) ein in einer im Gehäuse (2) gelagerten, das zweite Zahnrad (7) drehfest tragenden Hülse (6) drehfest geführt es und mittels eines Werkzeugs (18) gegen die Kraft einer Feder (16) axial verschiebbares Kupplungselement (9) enthält, das mit wenigstens einem radialen Mitnehmer (12, 13) in zumindest eine am ersten Zahnrad (3) befindlichen Nut (14) eingreift, und wobei die Hülse (6) in einem Endbereich (22) mit einem Innengewinde (21) zum Einschrauben des ein zugeordnetes Außengewinde (19) tragenden Werkzeugs (18) versehen ist, das mit einem dann in der Hülse (6) befindlichen Endabschnitt (23) gegen das Kupplungselement (9) drückt und dieses - die Drehkopplung der Zahnräder (3, 7) aufhebend - verschiebt, **dadurch gekennzeichnet, daß** das zweite Zahnrad (7) außerhalb des Gehäuses (2) auf der dort das Gehäuse (2) durchsetzenden Hülse (6) an ihrem ihrem Endbereich (22) abgekehrten Ende angeordnet ist, die wenigstens einen Schlitz (10) zum radialen Durchtritt des zumindest einen Mitnehmers (12) aufweist, und daß nach Aufhebung der Drehkopplung der Zahnräder (3, 7) Innengewinde (21) der Hülse (6) und Außengewinde (19) des Werkzeugs (18) eine Drehverbindung zwischen diesem und der Hülse und damit dem zweiten Zahnrad (7) bilden.

## Claims

1. Emergency actuation device for an electrically operated sliding or sliding/ventilation roof on a vehicle, with an electric motor and with a gear which is surrounded by a housing (2) and which contains a driven first gearwheel (3) which is connected fixedly in terms of rotation, via a clutch (9, 12, 13, 14) disengageable from outside the housing (2), to a second gear wheel (7) engaged with drive elements of the sliding roof, the clutch (9, 12, 13, 14) containing a clutch element (9) which is guided fixedly in terms of rotation in a sleeve (6) mounted in the housing (2) and carrying the second gearwheel (7) fixedly in terms of rotation and is axially displaceable counter to the force of a spring (16) by means of a tool (18) and which engages by means of at least one radial driver (12, 13) into at least one groove (14) located on the first gearwheel (3), and the sleeve (6) being provided, in one end region (22), with an internal thread (21) for screwing in the tool (18) which carries an associated external thread (19) and which, with an end portion (23) then located in the sleeve (6), presses against the clutch element (9) and displaces the latter so as to cancel the rotational coupling of the gearwheels (3, 7), **characterized in that** the second gear wheel (7) is arranged outside the housing (2), on the sleeve (6) passing through the housing (2) there, at that end of said sleeve which faces away from its end region (22), said sleeve having at least one slot (10) for the radial passage of at least one driver (12), and **in that**, after the rotational coupling of the gearwheels (3, 7) is cancelled, the internal thread (21) of the sleeve (6) and the external thread (19) of the tool (18) form a rotational connection between the latter and the sleeve and therefore the second gearwheel (7).

## Revendications

1. Dispositif d'actionnement d'urgence pour un toit coulissant ou coulissant-ouvrant à entraînement électrique sur un véhicule, comportant un moteur électrique et une transmission entourée par un boîtier (2) qui contient une première roue dentée (3) entraînée qui, par l'intermédiaire d'un accouplement (9, 12, 13, 14) apte à être reculé à l'extérieur du boîtier (2), est reliée à rotation solidaire à une deuxième roue dentée (7) qui engage des éléments d'entraînement du toit ouvrant, l'accouplement (9, 12, 13, 14) contenant un élément d'accouplement (9) guidé à rotation solidaire dans une douille (6) montée dans le boîtier (2), portant la deuxième roue dentée (7) à rotation solidaire et pouvant être déplacé au moyen d'un outil (18) en opposition à la force d'un ressort (16), l'élément d'accouplement engageant par au moins un dispositif d'entraînement radial (12, 13) au moins une rainure (14) située sur la première roue dentée (3), la douille (6) étant dotée dans une zone d'extrémité (22) d'un filet intérieur (21) permettant le vissage de l'outil (18) portant un filet extérieur (19) correspondant, repoussant l'élément d'accouplement (9) par un tronçon d'extrémité (23) situé hors de la douille (6) et le déplaçant en supprimant l'accouplement en rotation des roues dentées (3, 7), **caractérisé en ce que** la deuxième roue dentée (7) est disposée à l'extérieur du boîtier (2), sur l'extrémité de la douille (6), qui traverse le boîtier (2) en cet endroit, qui n'est pas tournée vers sa zone d'extrémité (22), la douille présentant au moins une fente (10) pour traverser radialement le dispositif d'entraînement (12) au moins présent, et **en ce qu'**après la suppression de l'accouplement en rotation des roues dentées (3, 7), le filet intérieur (21) de la douille (6) et du filet extérieur (19) de l'outil (18) forment une liaison en rotation entre l'outil et la douille, et donc entre l'outil et la deuxième roue dentée (7).
